# EUROPÄISCHE PATENTSCHRIFT

(11) **EP 3 674 033 B1**
(45) Veröffentlichungstag und Bekanntmachung des Hinweises auf die Patenterteilung: **12.07.2023**
(21) Anmeldenummer: 19214318.8
(22) Anmeldetag: 07.12.2019
(51) Int. Cl.: B23Q 17/22, G01B 21/04, G05B 19/401

(54) **VERFAHREN ZUM BESTIMMEN EINER TOPOGRAPHIE EINER WERKZEUGMASCHINE**
METHOD FOR DETERMINING TOPOGRAPHY OF A TOOL MACHINE
PROCÉDÉ DE DÉTERMINATION DE LA TOPOGRAPHIE D'UNE MACHINE À OUTILS

(30) Priorität: 27.12.2018 DE 102018133628; 22.02.2019 DE 102019104604
(43) Veröffentlichungstag der Anmeldung: 01.07.2020
(73) Patentinhaber: Schwäbische Werkzeugmaschinen GmbH, 78713 Schramberg-Waldmössingen (DE)
(72) Erfinder: Baur, Johannes, 78661 Dietingen (DE)
(74) Vertreter: Schorr, Peter Karl

(56) Entgegenhaltungen:
- EP-A2- 3 255 515
- DE-A1-102015 219 141
- DE-A1-102016 226 073
- JP-A- H04 122 534
- JP-A- 2004 345 005
- JP-A- 2014 151 423
- US-A1- 2010 060 906

## Beschreibung

Die Erfindung betrifft ein Verfahren, mittels dessen eine Topographie einer Werkzeugmaschine bestimmt werden kann, insbesondere im Rahmen einer Kalibrierung der Werkzeugmaschine.

Moderne Werkzeugmaschinen, insbesondere die sogenannten Bearbeitungszentren, verbinden eine hohe Flexibilität bei Bearbeitungsvorgängen mit einer hohen Bearbeitungsgenauigkeit. Um diese hohe Bearbeitungsgenauigkeit zu erreichen, ist es erforderlich, dass eine Werkzeugmaschine vor ihrer Inbetriebnahme so genau als möglich vermessen und auf der Grundlage der so ermittelten Daten kalibriert wird. Darüber hinaus ist es ebenfalls erforderlich, dass dieses Kalibrieren in regelmäßigen Abständen sowie im Bedarfsfall, beispielsweise nach einem unvorhergesehenen Betriebszustand der Werkzeugmaschine, wiederholt wird.

Das Kalibrieren der Werkzeugmaschine wird auf der Grundlage von Messanweisungen und Messprotokollen von fachkundigen Personen im Wesentlichen manuell durchgeführt. Hierbei ist insbesondere nachteilig, dass diese Art des Kalibrierens zeitaufwendig ist und es selbst bei hochqualifiziertem Fachpersonal nie ganz vermieden werden kann, dass Messwerte unzutreffend oder ungenau erfasst und/oder übertragen werden.

Ein Verfahren zum Bestimmen einer Mittelpunktsposition und/oder einer Achsausrichtung unter Verwendung eines zu installierenden Prüfkörpers ist bekannt aus DE 10 2015 2019 141 A1 und US 2010/0060906 A1.

Ein Verfahren zum Kalibrieren einer CNC Maschine unter Verwendung eines zu installierenden Prüfkörpers ist bekannt aus EP 3 255 515 A2.

Ein Verfahren zum Ermitteln eines Neigungsfehlers auf Basis von Winkelmessungen ist bekannt aus DE 10 2010 038 783 A1.

Ein Verfahren zum Ermitteln der Geradheit einer Linearführung ist bekannt aus DE 10 2016 226 073 A1.

Eine Aufgabe der Erfindung ist, ein Verfahren zur Verfügung zu stellen, mittels dessen das Bestimmen der Topographie vereinfacht und genauer durchführbar ist.

Diese Aufgabe wird erfindungsgemäß gelöst durch ein Verfahren nach Anspruch 1.

Auf der Grundlage des Topographieprotokolls kann die Werkzeugmaschine beispielsweise kalibriert werden Es ist denkbar, dass das Bestimmen und Erfassen gemäß Schritt a manuell oder halbautomatisch erfolgt. Das Verfahren lässt sich weiter vereinfachen, wenn auch das Bestimmen und/oder Erfassen in Schritt a mittels der oder einer weiteren automatisierten oder automatisierbaren Messeinrichtung erfolgt, die daten- und/oder signalleitend mit der Datenverarbeitungseinrichtung verbunden oder verbindbar ist.

Das Bestimmen und Erfassen gemäß Schritt a umfasst das Bestimmen und Erfassen einer Neigung des Maschinenbetts mittels eines Neigungsmessgeräts. Das Neigungsmessgerät wird dazu auf eine Ausrichtfläche des Maschinenbetts aufgesetzt, die bei korrekter Ausrichtung des Maschinenbetts senkrecht zu einer im Ort der Ausrichtfläche wirkenden Schwerkraft ausgerichtet ist.

Darüber hinaus kann zum Bestimmen der Geradheit der Linearführungen in Schritt b vorgesehen sein, dass ein Neigungswinkel des Werkzeugträgers bei seinem Verfahren entlang der Achsen des Koordinatensystems bestimmt wird. Wenn der Neigungswinkel des Werkzeugträgers bei dem Verfahren konstant bleibt, sind die Linearführungen gerade. Wenn der Neigungswinkel des Werkzeugträgers sich verändert, dann weisen die Linearführungen verrundete, insbesondere gebogene, oder winklige Abschnitte auf.

Bei einer vorteilhaften Weiterbildung des Verfahrens ist vorgesehen, dass das Bestimmen der Ausrichtung des Bauteilträgers in Relation zu dem Koordinatensystem der Werkzeugmaschine in Schritt c mittels einer in Abhängigkeit von dem Koordinatensystem an dem Maschinenbett positionierbaren Messeinrichtung erfolgt, beispielsweise mittels eines Laserentfernungsmessers.

Auf Grundlage der in den Schritten a bis c ermittelten Daten ist es in Schritt d ermöglicht, einfach zu bestimmen, ob die Linearführungen rechtwinklig zueinander angeordnet sind. Hierzu ist es vorteilhafterweise vorgesehen, dass ein Messwinkel an der Bauteilaufnahme angeordnet werden kann, der durch den von der Werkzeugaufnahme gehaltenen Messtaster ertastbar ist. Der Messwinkel weist Tastflächen auf, die gleichzeitig parallel zu drei durch die erste Achse, die zweite Achse und die dritte Achse aufgespannten Raumebenen ausrichtbar sind.

Um eine Rechtwinkligkeit der zweiten Achse zu der dritten Achse zu bestimmen, ist es vorteilhafterweise vorgesehen, dass der Messwinkel derart ausgerichtet wird, dass eine der Tastflächen parallel zu der durch die zweite und dritte Achse gebildeten Raumebene ausgerichtet wird. Dann werden Tastpunkte entlang einer parallel zu der dritten Achse ausgerichteten Raumlinie ermittelt. Danach werden Tastpunkte entlang einer parallel zu der zweiten Achse ausgerichteten Raumlinie ermittelt. Aus den durch den Messtaster ermittelbaren Raumlinien sowie insbesondere Daten einer Maschinensteuerung ist ermittelbar, ob die der zweiten Achse und der dritten Achse zugeordneten Linearführungen rechtwinklig zueinander angeordnet sind.

Um die Rechtwinkligkeit der ersten Achse zu der zweiten und dritten Achse zu bestimmen, ist es vorteilhafterweise vorgesehen, dass eine Tastfläche des Messwinkels parallel zu der durch die erste und zweite beziehungsweise durch die erste und dritte Achse gebildeten Raumebene zumindest nahezu ausgerichtet wird. Dann werden Tastpunkte entlang einer parallel zu der zweiten beziehungsweise dritten Achse ausgerichteten Raumlinie ermittelt. Danach werden Tastpunkte entlang der parallel zu der ersten Achse ausgerichteten Raumlinie ermittelt. Aus den durch den Messtaster ermittelbaren Raumlinien sowie insbesondere Daten einer Maschinensteuerung ist ermittelbar, ob die der ersten Achse und der zweiten beziehungsweise dritten Achse zugeordneten Linearführungen zumindest nahezu rechtwinklig zueinander angeordnet sind.

Aufgrund der in den Schritten a bis d ermittelten Daten ist es in Schritt e vorteilhafterweise ermöglicht zu bestimmen, ob die Werkzeugaufnahme einen Versatz in Richtung der ersten Achse und/oder der dritten Achse aufweist.

Hierzu ist es vorgesehen, dass an der Bauteilaufnahme eine Tastfläche angeordnet ist oder angeordnet sein kann, die senkrecht zu der ersten beziehungsweise dritten Achse und parallel zu der zweiten Achse ausrichtbar ist. Es ist vorteilhafterweise vorgesehen, dass mehrere in Richtung der zweiten Achse voneinander beabstandete und auf der Tastfläche angeordnete Tastpunkte mit dem Messtaster angefahren werden. Hierdurch ist der Versatz der Werkzeugaufnahme in Richtung der ersten beziehungsweise dritten Achse bestimmbar.

Bei einer Weiterbildung erweist es sich als vorteilhaft, wenn bei dem Bestimmen des Versatzes der Werkzeugaufnahme in Richtung der ersten beziehungsweise dritten Achse auch eine Geradheit der Tastfläche überprüft wird, um beispielsweise Verschleiß, Beschädigungen oder ähnliches an der Bauteilaufnahme und/oder dem Bauteilträger bestimmen zu können. Hierbei ist es insbesondere vorteilhaft, wenn die Tastfläche als ein Abschnitt der Bauteilaufnahme ausgebildet ist.

Aufgrund der in den Schritten a bis e ermittelten Daten ist es in Schritt f vorteilhafterweise ermöglicht zu bestimmen, ob die Werkzeugaufnahme einen Versatz in Richtung der zweiten Achse aufweist. Besonders bevorzugt weist die Bauteilaufnahme hierzu eine Ausnehmung mit einer bekannten Position und einer bekannten Form auf, beispielsweise eine Bohrung.

Die Ausnehmung wird vorteilhafterweise derart mit dem Messtaster angefahren, dass ihre Position im Koordinatensystem bestimmt wird. Aus den ermittelten Werten der Positionen der Ausnehmungen ist bestimmbar, ob die Werkzeugaufnahme eine Ablage entlang der zweiten Achse aufweist.

In diesem Schritt des Verfahrens wird insbesondere bestimmt, ob ein Rundlauf eines in der Werkzeugaufnahme angeordneten Werkzeugs um die Werkzeugachse herum und ob ein Winkelunterschied zwischen der Werkzeugachse und der ersten Achse innerhalb einer vorgesehenen Toleranz gegeben ist. Hierzu ist vorteilhafterweise vorgesehen, dass in der Werkzeugaufnahme ein Messdorn angeordnet wird, der eine zylindrisch ausgebildete und parallel zu der ersten Achse angeordnete Tastfläche aufweist, wobei in der Bauteilaufnahme ein Messtaster angeordnet ist.

Um den Rundlauf der Werkzeugaufnahme zu bestimmen, ist es vorgesehen, dass die Werkzeugaufnahme mit dem in ihr angeordneten Messdorn schrittweise um die erste Achse rotiert wird, wobei nach jedem Rotationsschritt der Messdorn mittels des in der Bauteilaufnahme angeordneten Messtasters abgetastet wird. Aus den so ermittelten Tastpunkten ist eine Ablage des Messdorns von einem idealen Rundlauf ermittelbar.

Um den Winkelunterschied zwischen der Werkzeugachse und der ersten Achse zu bestimmen, ist es vorgesehen, dass die Werkzeugaufnahme mit dem in ihr angeordneten Messdorn schrittweise entlang der ersten Achse verfahren wird, wobei nach jedem Verfahrschritt der Messdorn mittels des in der Bauteilaufnahme angeordneten Messtasters abgetastet wird. Aus den so ermittelten Tastpunkten ist ein Winkelunterschied zwischen der Werkzeugachse und der ersten Achse ermittelbar.

In Schritt h. des Verfahrens wird insbesondere bestimmt, ob die Werkzeugaufnahme rechtwinklig zu der zweiten Achse und der dritten Achse angeordnet ist. Hierzu ist vorteilhafterweise vorgesehen, dass in der Werkzeugaufnahme ein Messwerkzeug angeordnet wird, das eine parallel zu der zweiten und dritten Achse ausgerichtete Tastfläche aufweist, wobei in der Bauteilaufnahme ein Messtaster angeordnet ist.

Um die Rechtwinkligkeit der Werkzeugaufnahme in Bezug auf die zweite Achse und die dritte Achse zu bestimmen, ist es vorgesehen, dass die Werkzeugaufnahme mit dem in ihr angeordneten Messwerkzeug schrittweise um die erste Achse rotiert und über die zweite und dritte Achse positioniert wird, wobei nach jedem Rotationsschritt ein auf der Tastfläche angeordneter Tastpunkt mit dem Messtaster ertastet wird. Aus den so ermittelten Daten ist eine Kreisbahn/ ein Kreisbogen ermittelbar, entlang der/dessen der Tastpunkt sich bewegt und anhand derer bestimmbar ist, ob die Werkzeugaufnahme im rechten Winkel zu der zweiten und dritten Achse angeordnet ist.

In Schritt i. wird die Ausrichtung des Bauteilträgers auf der Grundlage der in vorhergehenden Schritten ermittelten Daten, bevorzugt automatisiert, überprüft. Hierzu kann beispielsweise ein Messtaster in der Werkzeugaufnahme angeordnet sein, wobei an einem ersten Rotationsabschnitt des Bauteilträgers, durch den die Bauteilaufnahme gehalten wird und der um die Trägerrotationsachse herum rotierbar ist, eine Kinematikmessvorrichtung angeordnet ist, die insbesondere einen kugelförmigen Tastkörper aufweist.

Der erste Rotationsabschnitt des Bauteilträgers wird schrittweise um die Trägerrotationsachse rotiert, wobei nach jedem Rotationsschritt der Bauteilträger derart entlang der entsprechenden Linearachsen verfahren wird, dass der Messtaster beim Ertasten des Tastkörpers in Richtung einer durch den Tastpunkt verlaufenden Normalen einer Oberfläche des Tastkörpers gerichtet ist. Aus den so ermittelten Daten ist eine Kreisbahn/ ein Kreisbogen ermittelbar, entlang der/dessen der Tastpunkt sich bewegt und anhand derer ein Winkelunterschied zwischen der Trägerrotationsachse und der ersten und/oder zweiten Achse bestimmbar ist.

Es wird vorgesehen, dass das Verfahren bei einer Werkzeugmaschine angewendet wird, deren Bauteilträger einen zweiten Rotationsabschnitt aufweist, der dem ersten Rotationsabschnitt gegenüberliegt. Die Bauteilaufnahme wird bei einer derartigen Werkzeugmaschine durch beide Rotationsabschnitte gehalten, geführt und angetrieben.

Im Schritt j1 ist es vorgesehen, dass eine Parallelität der Bauteilaufnahme zu der zweiten Achse und zu der dritten Achse überprüft wird. Dazu ist es vorgesehen, dass in der Werkzeugaufnahme ein Messtaster angeordnet ist, mit dem plane Flächen der Bauteilaufnahme, die parallel zu der zweiten und/ oder dritten Achse ausrichtbar sind, abgetastet werden. Hieraus ist bestimmbar, ob die Bauteilaufnahme tatsächlich parallel zu diesen Achsen ausrichtbar ist.

Darüber hinaus ist bei einer Ausführungsform des Verfahrens mit den Schritt j2. und k1. vorgesehen, dass die Werkzeugmaschine eine 4-achsige Werkzeugmaschine umfasst, an deren Bauteilaufnahme ein Bauteil verdrehsicher festlegbar ist

Unter Kinematik der ersten Rotationsachse wird nachfolgend verstanden und bezeichnet Rotationen von Elementen der Werkzeugmaschine um die auf den Bauteilträger bezogenen Hilfsachsen, die der Trägerrotationsachse und der zu ihr parallelen Hilfsachse entsprechen.

In Schritt j2 ist es vorgesehen, dass die Lage der Rotationsachse überprüft wird und ob die Trägerrotationsachse tatsächlich rechtwinklig zu den entsprechenden Linearachsen angeordnet ist. Darüber hinaus wird in Schritt j2 überprüft, ob die zur Trägerrotationsachse parallele Hilfsachse senkrecht zu den entsprechenden Linearachsen ausgerichtet ist.

Um die Lage und Rechtwinkligkeit der Trägerrotationsachse zu überprüfen ist vorteilhafterweise vorgesehen, dass die Kinematikmessvorrichtung an der Bauteilaufnahme festgelegt ist, wobei in der Werkzeugaufnahme ein Messtaster angeordnet ist. Der Bauteilträger wird schrittweise um die Trägerrotationsachse rotiert, wobei nach jedem Rotationsschritt der Bauteilträger derart entlang der entsprechenden Linearachsen verfahren wird, dass der Messtaster beim Ertasten des Tastkörpers in Richtung einer durch einen Tastpunkt verlaufenden Normalen der Oberfläche des Tastkörpers gerichtet ist. Aus den so ermittelten Daten ist eine Kreisbahn/ ein Kreisbogen ermittelbar, entlang der/dessen der Tastpunkt sich bewegt.

Aus einer Winkelablage zwischen der durch die Kreisbahn/ den Kreisbogen aufgespannten Ebene und einer durch einen Mittelpunkt der Kreisbahn/ des Kreisbogens sowie die entsprechenden Linearachsen aufgespannten Ebene, ist die Rechtwinkligkeit der Trägerrotationsachse in Bezug auf die entsprechenden Linearachsen bestimmbar.

Um die Ausrichtung der zur Trägerrotationsachse parallelen Hilfsachse zu überprüfen, ist es vorteilhafterweise vorgesehen, dass die Kinematikmessvorrichtung an der Bauteilaufnahme festgelegt ist, wobei in der Werkzeugaufnahme ein Messtaster angeordnet ist. Der Bauteilträger wird schrittweise entlang der Trägerrotationsachse verfahren, wobei nach jedem Verfahrschritt der Bauteilträger derart entlang der entsprechenden Linearachsen verfahren wird, dass der Messtaster beim Ertasten des Tastkörpers in Richtung einer durch einen Tastpunkt verlaufenden Normalen der Oberfläche des Tastkörpers gerichtet ist. Aufgrund der bekannten Maschinenparameter ist eine Raumlinie ermittelbar, entlang derer der Tastkörper verfahren wird. Aus einer Winkelablage zwischen der ermittelten Raumlinie und einer Senkrechten der durch die entsprechenden Linearachsen aufgespannten Ebene ist eine Rechtwinkligkeit der zur Trägerrotationsachse parallelen Hilfsachse zu den entsprechenden Linearachsen bestimmbar.

Im Schritt k1 ist es vorgesehen, dass eine Parallelität der Bauteilaufnahme zu der ersten, zweiten und dritten Achse überprüft wird. Dazu ist es vorgesehen, dass in der Werkzeugaufnahme ein Messtaster angeordnet ist, mit dem plane Flächen der Bauteilaufnahme, die parallel zu der ersten und/oder zweiten und/oder dritten Achse ausrichtbar sind, abgetastet werden. Hieraus ist bestimmbar, ob die Bauteilaufnahme tatsächlich parallel zu diesen Achsen ausrichtbar ist.

Vorteilhafterweise ist vorgesehen, dass der Bauteilträger mit der Bauteilaufnahme zu einem ersten Überprüfen der Parallelität der Bauteilaufnahme um 360° in eine erste Richtung um die Trägerrotationsachse herum rotiert wird. Besonders vorteilhafterweise wird der Bauteilträger anschließend um 360° in eine zweite Richtung um die Trägerrotationsachse herum rotiert und eine zweite Überprüfung der Parallelität durchgeführt. Hierdurch ist es ermöglicht, dass Umkehrfehler beim Rotieren um die Trägerrotationsachse ermittelt werden können.

In Schritt j3 ist es, ähnlich wie in Schritt j2, vorgesehen, die Lage der Trägerrotationsachse zu überprüfen und ob die Trägerrotationsachse tatsächlich rechtwinklig zu den entsprechenden Linearachsen angeordnet ist. Darüber hinaus wird in Schritt j3, ebenfalls in Analogie zum Schritt j2 überprüft, ob die zur Trägerrotationsachse parallele Hilfsachse senkrecht zu den entsprechenden Linearachsen ausgerichtet ist.

Um die Lage und Rechtwinkligkeit der Trägerrotationsachse zu überprüfen, ist abweichend von Schritt j2 vorgesehen, dass die Kinematikmessvorrichtung an dem Drehabschnitt der Bauteilaufnahme festgelegt ist, wobei in der Werkzeugaufnahme der Messtaster angeordnet ist. Im Weiteren erfolgt das Bestimmen der Lage und Rechtwinkligkeit der Trägerrotationsachse in Bezug auf die entsprechenden Linearachsen analog zum Schritt j2.

Um die Ausrichtung der zur Trägerrotationsachse parallelen Hilfsachse zu überprüfen, ist es bei der 5-achsigen Werkzeugmaschine vorteilhafterweise vorgesehen, dass die Kinematikmessvorrichtung, anders als bei der 4-achsigen Werkzeugmaschine, an dem Drehabschnitt der Bauteilaufnahme festgelegt ist, wobei in der Werkzeugaufnahme ein Messtaster angeordnet ist. Das Bestimmen der Lage der zur Trägerrotationsachse parallelen Hilfsachse und der Rechtwinkligkeit zwischen der zur Trägerrotationsachse parallelen Hilfsachse zu den entsprechenden Linearachsen erfolgt im weiteren in Analogie zu dem bei der 4-achsigen Werkzeugmaschine angewendeten und unter Schritt j2 beschriebenen Verfahren.

Mit Kinematik der zweiten Rotationsachse wird nachfolgend bezeichnet und verstanden eine Rotation von Elementen der Werkzeugmaschine um die auf den Drehabschnitt des Bauteilträgers bezogenen Hilfsachsen, die der Bauteilrotationsachse des Drehabschnitts und der zu ihr parallelen Hilfsachse entsprechen.

In Schritt k2 ist wird die Lage der Bauteilrotationsachse überprüft und ob die Bauteilrotationsachse rechtwinklig zu den entsprechenden Linearachsen angeordnet ist. Darüber hinaus wird in Schritt k2 die Lage der zur Bauteilrotationsachse parallelen Hilfsachse überprüft und ob diese Hilfsachse senkrecht zu den entsprechenden Linearachsen ausgerichtet ist.

Um die Rechtwinkligkeit der Bauteilrotationsachse zu überprüfen ist vorteilhafterweise vorgesehen, dass die Kinematikmessvorrichtung an dem Drehabschnitt der Bauteilaufnahme festgelegt ist, wobei in der Werkzeugaufnahme ein Messtaster angeordnet ist. Der Drehabschnitt wird schrittweise um die Bauteilrotationsachse rotiert, wobei nach jedem Rotationsschritt der Bauteilträger derart verfahren wird, dass der Messtaster beim Ertasten des Tastkörpers in Richtung einer durch einen Tastpunkt verlaufenden Normalen der Oberfläche des Tastkörpers gerichtet ist. Aus den so ermittelten Daten ist eine Kreisbahn/ ein Kreisbogen ermittelbar, entlang der/dessen der Tastpunkt sich bewegt.

Aus einer Winkelablage zwischen der durch die Kreisbahn/ den Kreisbogen aufgespannten Ebene und einer durch einen Mittelpunkt der Kreisbahn/ des Kreisbogens sowie die entsprechenden Linearachsen aufgespannten Ebene, ist die Rechtwinkligkeit der Trägerrotationsachse in Bezug auf die entsprechenden Linearachsen bestimmbar.

Um die Ausrichtung der zur Bauteilrotationsachse parallelen Hilfsachse zu überprüfen, ist es vorteilhafterweise vorgesehen, dass die Kinematikmessvorrichtung an dem Drehabschnitt der Bauteilaufnahme festgelegt ist, wobei in der Werkzeugaufnahme ein Messtaster angeordnet ist. Der Bauteilträger wird schrittweise entlang der Bauteilrotationsachse verfahren, wobei der Drehabschnitt gegenüber der Bauteilaufnahme stets den gleichen Drehwinkel aufweist und wobei nach jedem Verfahrschritt der Bauteilträger oder Werkzeugträger derart verfahren wird, dass der Messtaster beim Ertasten des Tastkörpers in Richtung einer durch einen Tastpunkt verlaufenden Normalen der Oberfläche des Tastkörpers gerichtet ist. Aufgrund der bekannten Maschinenparameter ist eine Strecke ermittelbar, entlang derer der Tastkörper verfahren wird. Aus einer Winkelablage zwischen der ermittelten Strecke und einer Senkrechten der durch die entsprechenden Linearachsen aufgespannten Ebene, ist eine Rechtwinkligkeit der zur Bauteilrotationsachse parallelen Hilfsachse zu den entsprechenden Linearachsen bestimmbar.

Es ist vorteilhafterweise vorgesehen, dass in Schritt I mittels eines in der Werkzeugaufnahme angeordneten Messtasters auf dem Drehabschnitt schrittweise Tastpunkte erfasst werden. Der Drehabschnitt wird nach einem ersten Durchlauf um 180° um die Bauteilrotationsachse rotiert und in einem zweiten Durchlauf erneut vermessen. Aus den so ermittelten Daten ist eine Kreisbahn ermittelbar, entlang welcher der Tastpunkt sich bewegt. Die Kreisbahn des Tastpunkts des Drehabschnitts wird bevorzugt in drei Positionen des Bauteilträgers bestimmt. In einer 0°-Position, in der die Bauteilrotationsachse parallel zu der ersten Ache und senkrecht zu der zweiten und dritten Achse ausgerichtet ist sowie in einer 90°-Position und in einer -90°-Position. Besonders bevorzugt werden in den Positionen auch Messungen durchgeführt, nachdem die Positionen des Bauteilträgers in unterschiedliche Richtungen heraus angefahren wurden.

Aus den in Schritt I ermittelten Kreisbahnen sind die Ebenheit des Drehabschnitts, eine Schieflage der Bauteilrotationsachse und die Lage der Trägerrotationsachse sowie deren Umkehrfehler ermittelbar.

Um in Schritt m die Konzentrizität des Drehabschnitts der Bauteilaufnahme in Relation zu der Werkzeugaufnahme zu bestimmen, ist es vorteilhafterweise vorgesehen, dass mittels eines in der Werkzeugaufnahme angeordneten Messtasters zumindest eine erste und eine zweite Messausnehmung angefahren werden. Bevorzugt ist die erste Messausnehmung eine Zentrierungsbohrung des Drehabschnitts, durch die die Bauteilrotationsachse verläuft und die zweite Messausnehmung eine Vorrichtungsaufnahmebohrung zur Ausrichtung einer Vorrichtung auf dem Drehabschnitt.

Um den Umkehrfehler bei der Rotation des Drehabschnitts um die Bauteilrotationsachse zu bestimmen, ist es vorteilhafterweise vorgesehen, dass das Anfahren der Messausnehmungen zweimal durchgeführt wird, jeweils nachdem der Drehabschnitt um 360° in gegenläufige Richtungen gedreht wurde.

Es ist auch möglich, dass im Rahmen von regelmäßigen Wartungsarbeiten Topographieprotokolle erstellt werden, die beispielsweise untereinander verglichen werden können, um so Veränderungen der Werkzeugmaschine feststellen zu können.

Darüber hinaus ist bei einer Ausführungsform des Verfahrens vorgesehen, dass die Datenverarbeitungseinrichtung auf der Grundlage zumindest einer in der Datenverarbeitungseinrichtung hinterlegten Regel Korrekturwerte ermittelt, anhand derer die Topographie der Werkzeugmaschine justierbar ist. Durch das Justieren der Werkzeugmaschine auf der Grundlage der Korrekturwerte ist die Genauigkeit der Werkzeugmaschine verbesserbar.

Ferner ist bei einer Ausführungsform des Verfahrens vorgesehen, dass die Datenverarbeitungseinrichtung und/oder eine weitere Datenverarbeitungseinrichtung auf der Grundlage des Topographieprotokolls und/oder der Korrekturwerte ein Abnahmeprotokoll der Werkzeugmaschine erstellt. Bei einer Erstinbetriebnahme der Werkzeugmaschine ist es üblich, dass wichtige Parameter der Werkzeugmaschine festgehalten werden. Beispielsweise ist es üblich, dass Einstellungen, die zum Kalibrieren der Werkzeugmaschine vorgenommen werden, dokumentiert werden.

Bei einer weiteren Ausführungsform des Verfahrens ist vorgesehen, dass auf der Grundlage des Topographieprotokolls und/oder der Korrekturwerte eine mechanische Justierung der Topographie der Werkzeugmaschine erfolgt. Mechanische Justierung im Sinne des Erfindungsgedanken meint sowohl das Einstellen der Maschine mittels dafür vorgesehener Verstellelemente, als auch das umarbeiten der Maschine, beispielsweise mittels Kaltumformen durch Stemmeisen, Hämmer, Hydraulikpressen oder Ähnliches.

Ferner ist bei einer Ausführungsform des Verfahrens vorgesehen, dass das Topographieprotokoll und/oder die Korrekturwerte von der Datenverarbeitungseinrichtung an eine Steuerungseinrichtung der Werkzeugmaschine übertragen werden, die eine Steuerung der Werkzeugmaschine auf der Grundlage des Topographieprotokolls und/oder der Korrekturwerte durchführt.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen des Verfahrens.

In der Zeichnung zeigen:
- Figur 1: Ein schematisches Ablaufdiagramm eines ersten Ausführungsbeispiels des Verfahrens;
- Figur 2: Ein schematisches Ablaufdiagramm eines zweiten Ausführungsbeispiels des Verfahrens;
- Figur 3: Ein schematisches Ablaufdiagramm eines dritten Ausführungsbeispiels des Verfahrens.

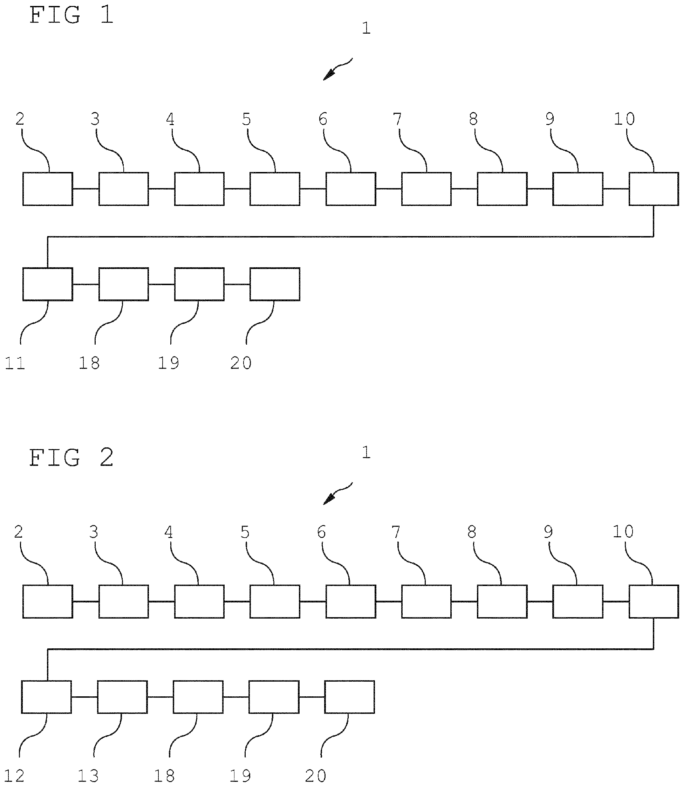

In Figur 1 ist ein Verfahren 1 zum Bestimmen einer Topographie einer Werkzeugmaschine gezeigt. Die Werkzeugmaschine weist ein Maschinenbett, durch das ein von einem Maschinennullpunkt ausgehendes kartesisches Koordinatensystem der Werkzeugmaschine festgelegt ist, einen Werkzeugträger der entlang von Linearführungen, die parallel zu Achsen des Koordinatensystems ausgerichtet sind, verlagerbar ist und der zumindest eine Werkzeugaufnahme zur Aufnahme eines zerspanenden Werkzeugs sowie einen Bauteilträger, der in Richtung einer ersten Achse von dem Werkzeugträger beabstandet ist und der eine parallel zu der ersten Achse ausgerichtete Bauteilaufnahme, durch die ein zu bearbeitendes Bauteil haltbar ist, umfasst, auf.

In Schritt a 2 des Verfahrens 1 wird die Ausrichtung des Maschinenbetts bestimmt und erfasst. Anschließend wird in Schritt b 3 die Geradheit der Linearführungen bestimmt und erfasst. Daraufhin wird in Schritt c 4 die Ausrichtung des Bauteilträgers in Relation zu dem Koordinatensystem bestimmt und erfasst. Bei dem dargestellten Verfahren 1 erfolgt das Bestimmen in den Schritten b 3 und c4 mittels automatisierter Messeinrichtungen, die datenleitend mit einer Datenverarbeitungseinrichtung verbunden sind.

Nach den Schritten a 2, b 3 und c 4 erfolgt der Schritt d 5, in dem die Anordnung der Linearführungen zueinander mittels einer automatisierten Messeinrichtung, die signalleitend mit der Datenverarbeitungseinrichtung verbunden ist, bestimmt und erfasst wird.

Nach den Schritten a 2, b 3, c 4 und d 5 erfolgt der Schritt e 6, in dem ein Versatz der Werkzeugaufnahme in Richtung der ersten Achse und der dritten Achse mittels einer automatisierten Messeinrichtung, die signalleitend mit der Datenverarbeitungseinrichtung verbunden ist, bestimmt und erfasst wird.

Nach den Schritten a 2, b 3, c 4, d 5 und e 6 erfolgt der Schritt f 7, in dem ein Versatz der Werkzeugaufnahme in Richtung der zweiten Achse mittels einer automatisierten Messeinrichtung, die datenleitend mit der Datenverarbeitungseinrichtung verbunden ist, bestimmt und erfasst wird.

Nach den Schritten a 2, b 3, c 4, d 5, e 6 und f 7 erfolgt der Schritt g 8, in dem ein Winkelunterschied zwischen einer Werkzeugachse und der ersten Achse und der Rundlauf der Werkzeugaufnahme mittels einer automatisierten Messeinrichtung, die datenleitend mit der Datenverarbeitungseinrichtung verbunden ist, bestimmt und erfasst wird.

Nach den Schritten a 2, b 3, c 4, d 5, e 6, f 7 und g 8 erfolgt der Schritt h 9, in dem ein Winkelunterschied zwischen der Werkzeugachse und der zweiten Achse sowie der Werkzeugachse und der dritten Achse mittels einer automatisierten Messeinrichtung, die datenleitend mit der Datenverarbeitungseinrichtung verbunden ist, bestimmt und erfasst wird.

Nach den Schritten a 2, b 3, c 4, d 5, e 6, f 7, g 8 und h 9 erfolgt der Schritt i 10, in dem ein Winkelunterschied zwischen einer Trägerrotationsachse des Bauteilträgers und der ersten Achse sowie der Trägerrotationsachse und der dritten Achse mittels einer automatisierten Messeinrichtung, die datenleitend mit der Datenverarbeitungseinrichtung verbunden ist, bestimmt und erfasst wird.

Nach den Schritten a 2, b 3, c 4, d 5, e 6, f 7, g 8, h 9 und i 10 erfolgt bei der in Figur 1 dargestellten Ausführungsform des Verfahrens 1 der Schritt j1 11. In Schritt j1 wird die Parallelität des Bauteilträgers in Relation zu der zweiten Achse und/oder der dritten Achse mittels einer automatisierten Messeinrichtung, die datenleitend mit der Datenverarbeitungseinrichtung verbunden ist, bestimmt und erfasst.

Das dargestellte Verfahren 1 wird bevorzugt bei einer 3-achsigen Werkzeugmaschine angewendet, an deren Bauteilaufnahme ein Bauteil verdrehsicher festlegbar ist.

Nach den Schritten a 2, b 3, c 4, d 5, e 6, f 7, g 8, h 9 und i 10 erfolgen bei der in Figur 2 dargestellten Ausführungsform des Verfahrens 1 anders als bei der in Figur 1 dargestellten Ausführungsform die Schritte j2 12 und k1 13. In Schritt j2 12 wird eine Kinematik der ersten Rotationsachse des Bauteilträgers bei seinem Rotieren um die Trägerrotationsachse mittels einer automatisierten Messeinrichtung, die datenleitend mit der Datenverarbeitungseinrichtung verbunden ist, bestimmt und erfasst. Anschließend wird in Schritt k1 13 eine Parallelität des Bauteilträgers in Relation zu der ersten Achse und/oder der zweiten Achse und/oder der dritten Achse mittels einer automatisierten Messeinrichtung, die datenleitend mit der Datenverarbeitungseinrichtung verbunden ist, bestimmt und erfasst.

Das in Figur 2 dargestellte Verfahren 1 wird bevorzugt bei einer 4-achsigen Werkzeugmaschine angewendet, an deren Bauteilaufnahme ein Bauteil verdrehsicher festlegbar ist.

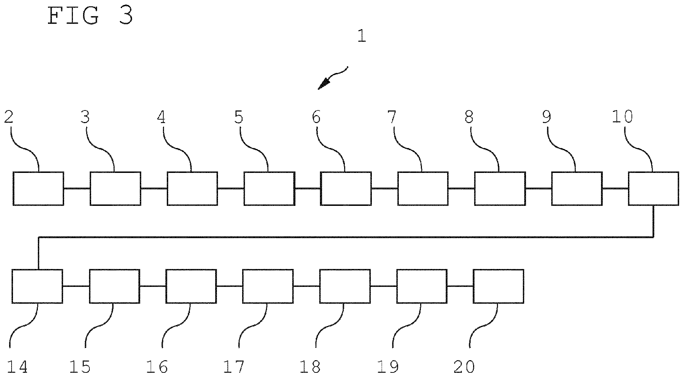

Anders als bei der in Figur 2 dargestellten Ausführungsform erfolgen bei der in Figur 3 dargestellten Ausführungsform des Verfahrens nach den Schritten a 2, b 3, c 4, d 5, e 6, f 7, g 8, h 9 und i 10 die Schritte j3 14, k2 15, I 16 und m 17. Diese Ausführungsform des Verfahrens 1 wird bevorzugt bei einer 5-achsigen Werkzeugmaschine angewendet, deren Bauteilaufnahme einen Drehabschnitt umfasst, der um eine Bauteilachse rotierbar ist.

In Schritt j3 14 wird eine Kinematik der ersten Rotationsachse des Bauteilträgers bei seinem Rotieren um die Trägerrotationsachse mittels einer automatisierten Messeinrichtung, die datenleitend mit der Datenverarbeitungseinrichtung verbunden ist, bestimmt und erfasst. Anschließend wird in Schritt k2 15 eine Kinematik der zweiten Rotationsachse des Drehabschnitts der Bauteilaufnahme bei ihrem Rotieren um die Bauteilrotationsachse mittels einer automatisierten Messeinrichtung, die datenleitend mit der Datenverarbeitungseinrichtung verbunden ist, bestimmt und erfasst. Daraufhin wird in Schritt I 16 eine Ebenheit des Drehabschnitts der Bauteilaufnahme mittels einer automatisierten Messeinrichtung, die datenleitend mit der Datenverarbeitungseinrichtung verbunden ist, bestimmt und erfasst. Danach wird in Schritt m 17 eine Konzentrizität des Drehabschnitts der Bauteilaufnahme in Relation zu der Werkzeugaufnahme mittels einer automatisierten Messeinrichtung, die datenleitend mit der Datenverarbeitungseinrichtung verbunden ist, bestimmt und erfasst.

Sowohl bei dem in Figur 1, als auch bei dem in Figur 2 und in Figur 3 dargestellten Verfahren 1 erfolgt nach Schritt j1 11 beziehungsweise Schritt k1 13 beziehungsweise Schritt m 17, auf der Grundlage der in den jeweils vorhergehenden Schritten bestimmten und erfassten Daten, ein Topographieerstellschritt 18, in dem ein Topographieprotokoll der Werkzeugmaschine erstellt wird.

Bei dem in Figur 1 bis 3 dargestellten Verfahren 1 erfolgt sowohl nach jedem einzelnen Bestimmungsschritt als auch nach dem gesamten Topographieerstellschritt 18 durch die Datenverarbeitungseinrichtung auf der Grundlage des Topographieprotokolls und von in der Datenverarbeitungseinrichtung hinterlegten Regeln ein Korrekturbestimmungsschritt 19, in dem Korrekturwerte ermittelt werden, anhand derer die Topographie der Werkzeugmaschine justierbar ist. Die Justierung erfolgt sowohl mechanisch als auch steuerungstechnisch.

Bei dem in Figur 1 bis 3 dargestellten Verfahren 1, erfolgt nach dem Topographieerstellschritt 18 und dem Korrekturbestimmungsschritt 19 durch die Datenverarbeitungseinrichtung auf der Grundlage des Topographieprotokolls ein abschließender Protokollschritt 20, in dem ein Abnahmeprotokoll der Werkzeugmaschine erstellt wird.

## Patentansprüche

1. Verfahren (1) zum Bestimmen einer Topographie einer Werkzeugmaschine, die aufweist:
- ein Maschinenbett, durch das ein von einem Maschinennullpunkt ausgehendes kartesisches Koordinatensystem der Werkzeugmaschine festgelegt ist,
- einen Werkzeugträger, der entlang von Linearführungen, die parallel zu Achsen des Koordinatensystems ausgerichtet sind, verlagerbar ist und der zumindest eine Werkzeugaufnahme zur Aufnahme eines zerspanenden Werkzeugs aufweist sowie
- einen Bauteilträger, der in Richtung einer ersten Achse von dem Werkzeugträger beabstandet und gegebenenfalls um eine parallel zu einer zweiten Achse ausgerichtete Rotationsachse herum zumindest nahezu vollständig verschwenkbar ist und der eine parallel zu der ersten Achse ausgerichtete Bauteilaufnahme, durch die ein zu bearbeitendes Bauteil haltbar ist, umfasst,
mit den Schritten:
a (2). Bestimmen und Erfassen der Ausrichtung des Maschinenbetts,
b (3). Bestimmen und Erfassen der Geradheit der Linearführungen,
c (4). Bestimmen und Erfassen der Ausrichtung des Bauteilträgers in Relation zu dem Koordinatensystem,
d (5). Bestimmen und Erfassen der Anordnung der Linearführungen zueinander mittels der oder einer weiteren automatisierten oder automatisierbaren Messeinrichtung, die daten- und/ oder signalleitend mit der Datenverarbeitungseinrichtung verbunden oder verbindbar ist,
e (6). Bestimmen und Erfassen eines Versatzes der Werkzeugaufnahme in Richtung der ersten Achse und/oder der dritten Achse mittels der oder einer weiteren automatisierten oder automatisierbaren Messeinrichtung, die daten- und/oder signalleitend mit der Datenverarbeitungseinrichtung verbunden oder verbindbar ist,
f (7). Bestimmen und Erfassen eines Versatzes der Werkzeugaufnahme in Richtung der zweiten Achse mittels der oder einer weiteren automatisierten oder automatisierbaren Messeinrichtung, die daten- und/oder signalleitend mit der Datenverarbeitungseinrichtung verbunden oder verbindbar ist,
g (8). Bestimmen und Erfassen eines Winkelunterschieds zwischen einer Werkzeugachse und der ersten Achse und der Rundlauf der Werkzeugaufnahme mittels der oder einer weiten automatisierten oder automatisierbaren Messeinrichtung, die daten- und/oder signalleitend mit der Datenverarbeitungseinrichtung verbunden und/oder verbindbar ist,
h (9). Bestimmen und Erfassen eines Winkelunterschieds zwischen der Werkzeugachse und einer zweiten Achse und/oder der Werkzeugachse und einer dritten Achse mittels der oder einer weiteren automatisierten oder automatisierbaren Messeinrichtung, die daten- und/oder signalleitend mit der Datenverarbeitungseinrichtung verbunden oder verbindbar ist,
i (10). Bestimmen und Erfassen eines Winkelunterschieds zwischen einer Trägerrotationsachse des Bauteilträgers und der ersten Achse und/oder der Trägerrotationsachse und der dritten Achse mittels der oder einer weiteren automatisierten oder automatisierbaren Messeinrichtung, die daten- und/oder signalleitend mit der Datenverarbeitungseinrichtung verbunden oder verbindbar ist,
wobei nach Schritt i (10) der Schritt:
j1 (11). Bestimmen und Erfassen einer Parallelität der an dem ersten Rotationsabschnitt und dem zweiten Rotationsabschnitt gehaltenen Bauteilaufnahme des Bauteilträgers in Relation zu der zweiten Achse und/ oder der dritten Achse mittels der oder einer weiteren automatisierten oder automatisierbaren Messeinrichtung, die daten- und/oder signalleitend mit der Datenverarbeitungseinrichtung verbunden oder verbindbar ist,
erfolgt und die Werkzeugmaschine eine 3-achsige Werkzeugmaschine umfasst, an deren Bauteilaufnahme ein Bauteil verdrehsicher festlegbar ist, oder
wobei nach Schritt i (10) die Schritte:
j2 (12). Bestimmen und Erfassen einer Kinematik einer ersten Rotationsachse des Bauteilträgers bei seinem Rotieren um die Trägerrotationsachse mittels der oder einer weiteren automatisierten oder automatisierbaren Messeinrichtung, die daten- und/oder signalleitend mit der Datenverarbeitungseinrichtung verbunden oder verbindbar ist und
k1 (13). Bestimmen und Erfassen einer Parallelität des Bauteilträgers in Relation zu der ersten Achse und/oder der zweiten Achse und/oder der dritten Achse mittels der oder einer weiteren automatisierten oder automatisierbaren Messeinrichtung, die daten- und/oder signalleitend mit der Datenverarbeitungseinrichtung verbunden oder verbindbar ist,
erfolgen und die Werkzeugmaschine eine 4-achsige Werkzeugmaschine umfasst, an deren Bauteilaufnahme ein Bauteil verdrehsicher festlegbar ist, oder
wobei nach Schritt i (10) die Schritte:
j3 (14). Bestimmen und Erfassen einer Kinematik einer ersten Rotationsachse des Bauteilträgers bei seinem Rotieren um die Trägerrotationsachse mittels der oder einer weiteren automatisierten oder automatisierbaren Messeinrichtung, die daten- und/oder signalleitend mit der Datenverarbeitungseinrichtung verbunden oder verbindbar ist,
k2 (15). Bestimmen und Erfassen einer Kinematik der zweiten Rotationsachse der Bauteilaufnahme bei ihrem Rotieren um eine Bauteilrotationsachse mittels der oder einer weiteren automatisierten oder automatisierbaren Messeinrichtung, die daten- und/oder signalleitend mit der Datenverarbeitungseinrichtung verbunden oder verbindbar ist,
I (16). Bestimmen und Erfassen einer Ebenheit der Bauteilaufnahme mittels der oder einer weiteren automatisierten oder automatisierbaren Messeinrichtung, die daten- und/oder signalleitend mit der Datenverarbeitungseinrichtung verbunden oder verbindbar ist und m (17). Bestimmen und Erfassen einer Konzentrizität der Bauteilaufnahme in Relation zu der Werkzeugaufnahme mittels der oder einer weiteren automatisierten oder automatisierbaren Messeinrichtung, die daten- und/oder signalleitend mit der Datenverarbeitungseinrichtung verbunden oder verbindbar ist,
erfolgen und die Werkzeugmaschine eine 5-achsige Werkzeugmaschine ist, deren Bauteilaufnahme eine Drehabschnitt umfasst, der um eine Bauteilachse rotierbar ist, und
wobei zumindest das Bestimmen in den Schritten b (3) und/oder c (4) mittels mindestens einer automatisierten oder automatisierbaren Messeinrichtung erfolgt, die daten- und/oder signalleitend mit einer Datenverarbeitungseinrichtung verbunden oder verbindbar sind, wobei das Bestimmen und Erfassen gemäß Schritt a ein Bestimmen und Erfassen einer Neigung des Maschinenbetts mittels eines Neigungsmessgeräts umfasst, das auf eine Ausrichtfläche des Maschinenbetts aufgesetzt wird, die senkrecht zu einer im Ort der Ausrichtfläche wirkenden Schwerkraft ausgerichtet ist, und wobei durch die Datenverarbeitungseinrichtung auf der Grundlage der in den Schritten a (2) bis i (10) sowie j1 (11) oder a (2) bis i (10) sowie j2 (12) bis k1 (13) oder a (2) bis i (10) sowie j3 (14) bis m (17) bestimmten und erfassten Daten, ein Topographieprotokoll der Werkzeugmaschine erstellt wird.

2. Verfahren (1) nach Anspruch 1, **dadurch gekennzeichnet, dass** die Datenverarbeitungseinrichtung auf der Grundlage zumindest einer in der Datenverarbeitungseinrichtung hinterlegten Regel Korrekturwerte ermittelt, anhand derer die Topographie der Werkzeugmaschine justierbar ist.

3. Verfahren (1) nach Anspruch 1 oder 2, **dadurch gekennzeichnet, dass** die Datenverarbeitungseinrichtung und/oder eine weitere Datenverarbeitungseinrichtung auf der Grundlage des Topographieprotokolls und/oder der Korrekturwerte ein Abnahmeprotokoll der Werkzeugmaschine erstellt.

4. Verfahren (1) nach einem der vorhergehenden Ansprüche, **dadurch gekennzeichnet, dass** auf der Grundlage des Topographieprotokolls und/ oder der Korrekturwerte eine mechanische Justierung der Topographie der Werkzeugmaschine erfolgt.

5. Verfahren (1) nach einem der vorhergehenden Ansprüche, **dadurch gekennzeichnet, dass** das Topographieprotokoll und/oder die Korrekturwerte von der Datenverarbeitungseinrichtung an eine Steuerungseinrichtung der Werkzeugmaschine übertragen werden, die eine Steuerung der Werkzeugmaschine auf der Grundlage des Topographieprotokolls und/oder der Korrekturwerte durchführt.

## Claims

1. Method (1) for determining a topography of a machine tool, which has:
- a machine bed, which defines a Cartesian coordinate system of the machine tool starting from a machine zero point,
- a tool carrier that can be displaced along linear guides that are aligned parallel to the axes of the coordinate system and which has at least one tool holder for accommodating a cutting tool, and
- a component carrier, which is spaced apart from the tool carrier in the direction of a first axis and, if necessary, can be pivoted at least almost completely around an axis of rotation aligned parallel to a second axis, and which has a component holder aligned parallel to the first axis, through which a component to be machined can be held,
with the steps:
a (2). Determining and recording the alignment of the machine bed,
b (3). Determining and recording the straightness of the linear guides,
c (4). Determining and recording the alignment of the component carrier in relation to the coordinate system,
d (5). Determining and recording the arrangement of the linear guides relative to one another by means of the or another automated or automatable measuring device that is or can be connected to the data processing device for data and/or signal transmission,
e (6). Determining and recording an offset of the tool holder in the direction of the first axis and/or the third axis by means of the or another automated or automatable measuring device that is or can be connected to the data processing device for data and/or signal transmission,
f (7). Determining and recording an offset of the tool holder in the direction of the second axis by means of the or another automated or automatable measuring device that is or can be connected to the data processing device for data and/or signal transmission,
g (8). Determining and recording an angle difference between a tool axis and the first axis and the concentricity of the tool holder by means of the or a wide automated or automatable measuring device that is and/or can be connected to the data processing device for data and/or signal transmission,
h (9). Determining and recording an angular difference between the tool axis and a second axis and/or the tool axis and a third axis by means of the or another automated or automatable measuring device that is or can be connected to the data processing device for data and/or signal transmission,
i (10). Determining and recording an angular difference between the tool axis and a second axis and/or the tool axis and a third axis by means of the or another automated or automatable measuring device that is or can be connected to the data processing device for data and/ or signal transmission,
wherein after Step i (10) the step:
j1 (11). Determining and recording of a parallelism of the component holder of the component carrier held on the first rotation section and the second rotation section in relation to the second axis and/or the third axis by means of the or another automated or automatable measuring device, which is connected or connectable to the data processing device in a data and/or signal-transmitting manner,
takes place and the machine tool comprises a 3-axis machine tool, on the component holder of which a component can be fixed in a torsion-proof manner, or
wherein after Step i (10) the step:
j2 (12). Determining and recording a kinematics of a first axis of rotation of the component carrier during its rotation about the carrier axis of rotation by means of the or another automated or automatable measuring device which is or can be connected to the data processing device in a data and/or signal-transmitting manner and
k1 (13). Determining and recording parallelism of the component carrier in relation to the first axis and/or the second axis and/or the third axis by means of the or another automated or automatable measuring device that is or can be connected to the data processing device for data and/or signal transmission, takes place and the machine tool comprises a 4-axis machine tool, on the component holder of which a component can be fixed in a torsion-proof manner, or
wherein after Step i (10) the step:
j3 (14). Determining and recording a kinematics of a first axis of rotation of the component carrier during its rotation about the carrier axis of rotation by means of the or another automated or automatable measuring device that is or can be connected to the data processing device in a data and/or signal-transmitting manner,
k2 (15). Determining and recording a kinematics of the second axis of rotation of the component holder during its rotation about a component axis of rotation by means of the or another automated or automatable measuring device that is or can be connected to the data processing device in a data and/or signal-transmitting manner,
l (16). Determining and recording of a flatness of the component holder by means of the or another automated or automatable measuring device which is or can be connected to the data processing device for data and/or signal transmission and
m (17). Determining and recording a concentricity of the component holder in relation to the tool holder by means of the or another automated or automatable measuring device that is or can be connected to the data processing device for data and/or signal transmission,
and the machine tool is a 5-axis machine tool, the component holder of which includes a rotary section which can be rotated about a component axis, and wherein at least the determination in Steps b (3) and/or c (4) is carried out by means of at least one automated or automatable measuring device that is or can be connected to a data processing device for data and/or signal transmission, wherein the determining and recording according to Step a includes determining and recording an inclination of the machine bed using an inclination measuring device, which is placed on an alignment surface of the machine bed, which is aligned perpendicular to a gravitational force acting at the location of the alignment surface, and wherein a topography protocol of the machine tool is created by the data processing device on the basis of the data determined and recorded in Steps a (2) to i (10) and j1 (11) or a (2) to i (10) and j2 (12) to k1 (13) or a (2) to i (10) and j3 (14) to m (17).

2. Method (1) according to Claim 1, **characterised in that** the data processing device determines correction values on the basis of at least one rule stored in the data processing device, by means of which the topography of the machine tool can be adjusted.

3. Method (1) according to Claim 1 or 2, **characterised in that** the data processing device and/or another data processing device creates an acceptance protocol for the machine tool on the basis of the topography protocol and/or the correction values.

4. Method (1) according to one of the preceding claims, **characterised in that** a mechanical adjustment of the topography of the machine tool takes place on the basis of the topography protocol and/or the correction values.

5. Method (1) according to one of the preceding claims, **characterised in that** the topography protocol and/or the correction values are transmitted from the data processing device to a control device of the machine tool, which controls the machine tool on the basis of the topography protocol and/or the correction values.

## Revendications

1. Procédé (1) qui permet de déterminer la topographie d'une machine-outil, qui comprend :
- un banc de machine qui définit un système de coordonnées cartésiennes de la machine-outil à partir d'un point zéro de la machine,
- un porte-outil qui peut être déplacé le long de guides linéaires orientés parallèlement aux axes du système de coordonnées, et qui comporte au moins un porte-outil destiné à recevoir un outil de coupe, et
- un support de composants qui est espacé du support d'outil dans la direction d'un premier axe, et qui peut éventuellement pivoter presque entièrement autour d'un axe de rotation orienté parallèlement à un deuxième axe, et qui comprend un logement de composants orienté parallèlement au premier axe, qui peut maintenir un composant à usiner,
selon les étapes suivantes :
a (2). Détermination et détection de l'orientation du banc de la machine,
b (3). Détermination et enregistrement de la rectitude des guides linéaires,
c (4). Déterminer et détecter l'orientation du support de composant par rapport au système de coordonnées,
d (5). Déterminer et détecter la disposition des guides linéaires les uns par rapport aux autres au moyen du ou dispositif de mesure automatisé ou automatisable (ou d'un autre), qui est ou peut être relié au dispositif de traitement des données par une ligne de données et/ou de signaux,
e (6). Déterminer et détecter un décalage du porte-outils dans la direction du premier axe et/ou du troisième axe, au moyen du dispositif de mesure automatisé ou automatisable, ou d'un autre, qui est ou peut être relié au dispositif de traitement des données par une ligne de transmission de données et/ou de signaux,
f (7). Déterminer et détecter un décalage du porte-outil dans la direction du deuxième axe au moyen du ou d'un autre dispositif de mesure automatisé ou automatisable, qui est ou peut être relié au dispositif de traitement des données par une ligne de transmission de données et/ou de signaux,
g (8). Déterminer et détecter un décalage du porte-outils dans la direction du premier axe et/ou du troisième axe, au moyen du dispositif de mesure automatisé ou automatisable, ou d'un autre, qui est ou peut être relié au dispositif de traitement des données par une ligne de transmission de données et/ou de signaux,
h (9). Déterminer et détecter un décalage du porte-outils dans la direction du premier axe et/ou du troisième axe, au moyen du dispositif de mesure automatisé ou automatisable, ou d'un autre, qui est ou peut être relié au dispositif de traitement des données par une ligne de transmission de données et/ou de signaux,
I / 10 Déterminer et détecter une différence angulaire entre un axe de rotation de support de composant et le premier axe et/ou l'axe de rotation de support et le troisième axe, au moyen du dispositif de mesure automatisé ou automatisable, ou d'un autre, qui est ou peut être relié au dispositif de traitement de données par conduction de données et/ou de signaux,
sous condition, après l'étape i (10), l'étape :
j1 (11). Déterminer et détecter un parallélisme du logement de composant du support de composant maintenu sur la première section de rotation et la deuxième section de rotation par rapport au deuxième axe et/ou au troisième axe au moyen du ou d'un autre dispositif de mesure automatisé ou automatisable, qui est ou peut être relié au dispositif de traitement de données par une ligne de données et/ou de signaux,
et la machine-outil comprend une machine-outil à 3 axes sur le logement de composant de laquelle un composant peut être fixé sans possibilité de rotation, ou bien
sous condition, après l'étape i (10), les étapes :
j2 (12). Déterminer et détecter une cinématique d'un premier axe de rotation du support de composants lors de sa rotation autour de l'axe de rotation du support, au moyen du dispositif de mesure automatisé ou automatisable, ou d'un autre, qui est ou peut être relié au dispositif de traitement de données par conduction de données et/ou de signaux, et
k1 (13). Déterminer et détecter un parallélisme du support de composants par rapport au premier axe et/ou au deuxième axe et/ou au troisième axe au moyen du dispositif de mesure automatisé ou automatisable, ou d'un autre, qui est relié ou peut être relié au dispositif de traitement de données par conduction de données et/ou de signaux,
et la machine-outil comprend une machine-outil à 4 axes, sur le logement de composant de laquelle un composant peut être fixé sans possibilité de rotation, ou bien
sous condition, après l'étape i (10), les étapes :
j3 (14). Déterminer et détecter une cinématique d'un premier axe de rotation du support de composants lors de sa rotation autour de l'axe de rotation du support, au moyen du dispositif de mesure automatisé ou automatisable, ou d'un autre, qui est ou peut être relié au dispositif de traitement de données par conduction de données et/ou de signaux,
k2 (15). Déterminer et détecter une cinématique du deuxième axe de rotation du logement de composant lors de sa rotation autour d'un axe de rotation de composant au moyen du dispositif de mesure automatisé ou automatisable, ou d'un autre, qui est ou peut être relié au dispositif de traitement de données par conduction de données et/ou de signaux,
l (16). Déterminer et détecter la disposition des guides linéaires les uns par rapport aux autres au moyen du ou dispositif de mesure automatisé ou automatisable, ou d'un autre, qui est ou peut être relié au dispositif de traitement des données par une ligne de données et/ou de signaux,
m (17). Déterminer et détecter une concentricité du logement de pièce par rapport au logement d'outil au moyen du dispositif de mesure automatisé ou automatisable, ou d'un autre, qui est ou peut être relié au dispositif de traitement de données par conduction de données et/ou de signaux,
et la machine-outil est une machine-outil à 5 axes dont le logement de composant comprend une section rotative qui peut tourner autour d'un axe de composant, et au moins la détermination dans les étapes b (3) et/ou c (4) s'effectuant au moyen d'au moins un dispositif de mesure automatisé ou automatisable, qui est ou peut être relié à un dispositif de traitement de données par une ligne de données et/ou de signaux, la détermination et la détection selon l'étape a comprenant une détermination et une détection d'une inclinaison du banc de la machine au moyen d'un inclinomètre placé sur une surface d'alignement du banc de machine qui est orientée perpendiculairement à une force de gravité agissant à l'endroit de la surface d'alignement, et dans lequel un protocole topographique de la machine-outil est établi par le dispositif de traitement de données, sur la base des données déterminées et saisies dans les étapes a (2) à i (10) ainsi que j1 (11) ou a (2) à i (10) ainsi que j2 (12) à k1 (13) ou a (2) à i (10) ainsi que j3 (14) à m (17).

2. Procédé (1) selon la revendication 1, **caractérisé par le fait que** le dispositif de traitement de données détermine, sur la base d'au moins une règle enregistrée dans le dispositif de traitement de données, des valeurs de correction qui permettent d'ajuster la topographie de la machine-outil.

3. Procédé (1) selon la revendication 1 ou 2, **caractérisé par le fait que** le dispositif de traitement de données et/ou un autre dispositif de traitement de données établit un protocole de réception de la machine-outil sur la base du protocole de topographie et/ou des valeurs de correction.

4. Procédé (1) selon l'une des revendications précédentes, **caractérisé par le fait qu'**un ajustement mécanique de la topographie de la machine-outil est effectué sur la base du protocole de topographie et/ou des valeurs de correction.

5. Procédé (1) selon l'une quelconque des revendications précédentes, **caractérisé par le fait que** le protocole topographique et/ou les valeurs de correction sont transmises par le dispositif de traitement de données à un dispositif de commande de la machine-outil, qui effectue une commande de la machine-outil sur la base du protocole topographique et/ou des valeurs de correction.
